# FASCICULE DE BREVET EUROPEEN

(11) **EP 1 682 273 B1**
(45) Date de publication et mention de la délivrance du brevet: **05.12.2007**
(21) Numéro de dépôt: 04805768.1
(22) Date de dépôt: 21.10.2004
(51) Int. Cl.: B01L 3/00, B01J 19/00

(54) **DISPOSITIF DE TRAVAIL COMPORTANT DES ZONES DE TRAVAIL BORDEES, LABORATOIRE SUR PUCE ET MICROSYSTEME**
BEGRENZTE BEARBEITUNGSZONEN UMFASSENDE BEARBEITUNGSVORRICHTUNG, ON-CHIP-LABOR UND MIKROSYSTEM
WORKING DEVICE COMPRISING BOUNDED WORKING ZONES, LABORATORY-ON-CHIP AND MICROSYSTEM

(30) Priorité: 31.10.2003 FR 0350762
(43) Date de publication de la demande: 26.07.2006
(73) Titulaire: COMMISSARIAT A L'ENERGIE ATOMIQUE, 75015 Paris (FR); BIOMERIEUX SA, 69280 Marcy L'Etoile (FR)
(72) Inventeur: DELATTRE, Cyril, 38100 Grenoble (FR); MARCHAND, Gilles, 38119 Pierre Chatel (FR); POUTEAU, Patrick, 38240 Meylan (FR); GINOT, Frédéric, 38120 Saint Egrève (FR)
(74) Mandataire: Poulin, Gérard
(86) Numéro de dépôt international: PCT/FR2004/050525
(87) Numéro de publication internationale: WO 2005/042162

(56) Documents cités:
- WO-A-02/41992
- WO-A-03/041863
- WO-A-03/059518
- US-B1- 6 210 894

## Description

### Domaine technique de l'invention

La présente invention se rapporte à un dispositif de travail comportant des zones de travail bordées, à un laboratoire sur puce et à un microsystème comprenant ce dispositif, notamment à une puce biologique. La présente invention se rapporte également à un procédé de fabrication d'un dispositif de l'invention.

La présente invention permet d'obtenir une matrice de gouttes localisées, à haute densité, sur une surface, à partir d'un liquide d'intérêt. Elle permet d'assurer facilement la transition d'une chambre fluidique fermée, appelée boîte de travail, et remplie par un liquide d'intérêt à une matrice de gouttes, ou micro-volumes, parfaitement localisées sur une surface placée dans ladite chambre, lorsque le liquide d'intérêt est évacué de ladite chambre fluidique.

Par matrice de gouttes, on entend un arrangement déterminé desdites gouttes, sans qu'une forme géométrique particulière dudit arrangement soit exigée. La matrice de gouttes peut être ronde, carrée, polygonale et même aléatoire, l'essentiel étant que les gouttes formées soient disposées de manière localisée et déterminée sur la surface conformément à l'objectif atteint par la présente invention. Dans le contexte de la présente invention, par « localisée », on entend circonscrite, individualisée et distincte des autres gouttes capturées volontairement sur ladite surface grâce au dispositif de l'invention.

Chacune des gouttes peut être soumise à une ou plusieurs opérations destinées à analyser qualitativement et/ou quantitativement un ou plusieurs analyte (s) présent (s) ou susceptible (s) d'être présent(s) dans le liquide d'intérêt, par exemple une molécule, un oligonucléotide, une protéine, etc. L'analyse des analytes dans la goutte peut être réalisée par toute technique connue de l'homme du métier pour effectuer des analyses, en particulier dans un volume de liquide aussi réduit qu'une goutte. Il peut s'agir des techniques d'analyse utilisées sur les puces biologiques. L'analyse peut ou non faire intervenir la surface du dispositif de l'invention recouverte par la goutte, suivant la mise en oeuvre de la présente invention.

Chacune des gouttes forme un volume dans lequel des réactions chimiques ou biochimiques peuvent être réalisées. Toute réaction chimique ou biochimique connue de l'homme du métier peut être réalisée dans ce volume. Ces réactions peuvent ou non faire intervenir la surface du dispositif de l'invention recouverte par la goutte, suivant la mise en oeuvre de la présente invention. Lorsque ces réactions font intervenir la surface du dispositif de l'invention recouverte par la goutte, elles peuvent le faire avec une seule goutte ou plusieurs gouttes déposées successivement sur cette surface, ces gouttes successives étant constituées d'un seul ou de plusieurs liquides d'intérêt différents suivant la mise en oeuvre de la présente invention. Un exemple de réactions chimiques faisant intervenir deux liquides d'intérêt différents sur un dispositif de l'invention est le suivant : au moyen d'une goutte d'un premier liquide d'intérêt, dépôt localisé d'un film d'un polymère organique sur la surface couverte par cette goutte, puis, au moyen d'une goutte d'un deuxième liquide d'intérêt, fonctionnalisation du film polymère organique déposé sur cette surface.

Selon la présente invention, analyse(s) et réaction(s) chimique(s)/biochimique(s) peuvent être mises en oeuvre de manière exclusive sur un dispositif conforme à la présente invention (analyse ou réaction), ou de manière complémentaire. Dans ce dernier cas, cela peut être simultanément (réaction et analyse) ou successivement (réaction puis analyse ou analyse puis réaction). En outre, plusieurs analyses et/ou plusieurs réactions peuvent se succéder. Par exemple, le dispositif de la présente invention peut avantageusement intervenir, d'une part dans la fabrication d'une carte, ou laboratoire sur puce (par exemple par des réactions chimiques permettant de déposer un polymère, puis de le fonctionnaliser) (« lab-on-chip »), dans laquelle toutes les étapes nécessaires aux analyses qualitatives et quantitatives d'un liquide d'intérêt sont intégrées : manipulation de fluide, réactions chimiques et/ou biochimiques, puce de détection optique, électrique et/ou chimique, etc. ; et d'autre part dans l'utilisation de cette carte, ou laboratoire sur puce, pour effectuer des analyses qualitatives et/ou quantitatives dans des gouttes d'un liquide d'intérêt à analyser (réaction(s) chimique (s)/biochimique (s) et analyse).

Dans la présente description, les références entre crochets [ ] renvoient à la liste de références annexée.

### Etat de la technique

Selon les applications envisagées, cette invention se rapproche du domaine général de la formation de gouttes, du travail en micro-volume(s), des matrices à haute densité de gouttes.

La formation de zones localisées pour isoler une phase liquide est répandue dans le domaine des puces biologiques, et notamment des puces à ADN. Pour ces applications, le volume réactionnel est souvent très réduit pour économiser les produits biologiques et les réactifs.

Pour la formation de gouttes localisées et de matrices à haute densité de gouttes, les sociétés Protogene Laboratories Inc. **[1]** et Affymetrix Inc. **[2]** utilisent une technique utilisant un système de dispense automatisé. Ces systèmes conduisent à la formation de gouttes et de matrices à haute densité de plots ou de gouttes sur une surface.

Cependant, outre le système de dispense de gouttes, ces techniques nécessitent toutes l'utilisation d'un dispositif de déplacement et d'alignement précis de ce système, ainsi qu'un dispositif pour l'alimentation en liquide. Le coût de cet appareillage est élevé. En outre, la densité maximale des matrices de gouttes qui peuvent être formées est limitée par une combinaison entre la taille des gouttes dispensées et le pas minimal inter-plots du système de dispense.

Pour la formation de matrices à haute densité de micro-cuvettes, deux exemples significatifs peuvent être cités : la formation d'un réseau de cuvettes micro-fabriquées par gravure dans une plaque de silicium pour réaliser des amplifications d'ADN par PCR en micro-volumes de quelques picolitres, et la formation de puits ou de canaux par photolithographie sur des résines photosensibles déposées sur un substrat en plastique **[3]**. Avec ces techniques, le nombre de puits varie de 100 à 9600 puits, avec des diamètres de 60 à 500 µm et des profondeurs de 5 à 300 µm.

Cependant, les bords de ces cuvettes ne laissent pas de séparation physique entre la phase liquide au sein de la cuvette et celle à l'extérieur de celle-ci, autorisant donc des connexions entre les cuvettes, et donc des contaminations entre elles. En outre, ces dispositifs nécessitent pour leur utilisation des systèmes de dispense de gouttes, un dispositif de déplacement et d'alignement précis de ce système, ainsi qu'un dispositif pour l'alimentation en liquide. On retrouve donc les mêmes inconvénients et problèmes que ceux précités.

Pour la détection électrique ou électrochimique dans les tests biologiques, un grand nombre de systèmes de détection électrique ou électrochimique décrits dans la littérature ne permet pas de descendre sous le nanomolaire en termes de limite de détection, limitation souvent due au faible nombre d'électrons générés par chaque hybride.

Les techniques faisant intervenir une accumulation enzymatique permettent d'abaisser cette limite de détection aux environs du picomolaire du fait de l'amplification élevée du nombre d'espèces rédox à détecter présentes dans le milieu réactionnel **[4]**. Cependant, cette méthode d'amplification engendre un problème pour les systèmes multiplots connus actuellement car le composé rédox diffuse et peut ainsi contaminer les plots voisins.

Dans ce but, la plupart du temps, l'utilisation de structures tridimensionnelles (utilisation de compartiments) est recommandée dans la littérature. Par exemple, Infineon **[6]** propose des murs en polymères et un système de migration des molécules par des forces électriques, de manière à les confiner dans un volume défini et à éviter ainsi la contamination inter-plots. Malheureusement, des problèmes de remplissage fluidique peuvent être rencontrés avec ce genre d'approche lorsqu'on souhaite par exemple travailler en veine liquide très fine. Là aussi, un dispenseur de gouttes devient indispensable.

Il existe donc un réel besoin d'un dispositif permettant d'obtenir aisément une matrice de gouttes à haute densité à partir d'un liquide d'intérêt, utilisable sans aucun appareillage de dispense de gouttes, facile à fabriquer, permettant d'éviter efficacement des contaminations entre les gouttes, et qui peut être utilisé de manière très souple avec tous les procédés actuellement connus de l'homme du métier pour analyser collectivement ou individuellement des micro-volumes, par exemple sur un laboratoire sur puce, qu'il s'agisse d'un procédé chimique, électrique ou optique ou d'une combinaison de ces procédés.

### Exposé de l'invention

La présente invention répond précisément à ce besoin, et à d'autres encore, expliqués ci-dessous, en fournissant un dispositif de travail comprenant :
- une boîte de travail munie de moyens d'introduction d'un liquide d'intérêt dans la boîte et de moyens d'extraction du liquide d'intérêt de la boîte,
- un substrat comportant une surface active sensiblement non mouillante vis-à-vis dudit liquide d'intérêt et enfermée dans ladite boîte,
- plusieurs zones de travail formées sur ladite surface active de manière distincte et entourées chacune par une bordure formée sur ladite surface active sensiblement non mouillante vis-à-vis du liquide d'intérêt, les bordures ne se touchant pas entre elles et n'ayant pas de bord commun,
dans lequel les moyens d'introduction et d'extraction du liquide d'intérêt de la boîte sont disposés sur ladite boîte de travail de telle manière que lorsque le liquide d'intérêt est introduit dans la boîte, il couvre les zones de travail et leur bordure respective, et
dans lequel les bordures ont une géométrie telle que lorsque le liquide d'intérêt est extrait de la boîte, après y avoir été introduit, une goutte de liquide d'intérêt reste prisonnière par chaque bordure et en contact de la zone de travail qu'elle entoure.

La présente invention répond également à ce besoin en fournissant un laboratoire sur puce comprenant un dispositif selon l'invention.

La présente invention répond également à ce besoin en fournissant un système comprenant un dispositif selon l'invention.

Le dispositif de la présente invention permet d'effectuer sans appareillage de dispense de gouttes, une transition d'un volume de liquide d'intérêt présent dans une chambre fluidique, constituée par la boîte de travail, vers une multitude de gouttes dudit liquide retenues par les micro-cuvettes indépendantes constituées par les bordures entourant les zones de travail, au sein desquelles peuvent se trouver par exemple un capteur ou un actionneur, optique, électrique, magnétique, mécanique, électrostatique, etc.

Dans le contexte de la présente invention, un liquide est dit « d'intérêt » dès lors que ce liquide est destiné à être capturé par des bordures d'un dispositif selon l'invention, pour former une matrice de gouttes de ce liquide.

Par « liquide d'intérêt », on entend tout liquide susceptible de nécessiter une disposition en matrice de gouttes sur un support, par exemple dans un but analytique et/ou chimique et/ou biochimique. Par « but chimique et/ou biochimique », on entend toute réaction chimique et/ou biochimique qui peut être réalisée dans un liquide. Par « but analytique », on entend toute analyse qualitative et/ou quantitative qui peut être réalisée dans un liquide.

Le liquide d'intérêt peut être organique ou aqueux. Il peut s'agir d'un quelconque des liquides actuellement manipulés en laboratoire ou dans l'industrie, par exemple sur des laboratoires sur puce. Il peut s'agir par exemple d'un liquide choisi parmi une solution, un solvant, un réactif, un échantillon, un extrait cellulaire, un prélèvement provenant d'un organisme animal ou végétal, un prélèvement effectué dans la nature ou dans l'industrie, etc. Il peut s'agir d'un liquide biologique ou chimique. Ce liquide d'intérêt peut être un liquide dilué, si nécessaire, pour son utilisation avec le dispositif de la présente invention, comme cela peut se faire sur les laboratoires sur puce. Un produit solide peut être mis en solution pour constituer un liquide d'intérêt au sens de la présente invention. Ce produit solide peut être choisi par exemple parmi un produit chimique ou biochimique, un réactif, un matériau à analyser, un prélèvement provenant d'un organisme animal ou végétal, un prélèvement effectué dans la nature ou dans l'industrie, etc. L'homme du métier connaît la manipulation de tels produits et liquides d'intérêt.

Le substrat du dispositif de l'invention constitue en fait le support sur lequel est formée la surface active avec ses zones de travail et leur bordure respective. Le substrat peut être constitué de tout matériau approprié pour la mise en oeuvre de la présente invention. Il peut s'agir par exemple d'un des matériaux de base utilisés pour fabriquer les laboratoires sur puce, puces biologiques, microsystèmes, etc. Il peut s'agir par exemple d'un matériau choisi dans le groupe constitué de silicium, d'oxyde de silicium, de nitrure de silicium, de verre, de plastique, d'un polymère organique, et d'un métal ou d'un alliage de métal. Les polymères organiques peuvent être par exemple choisis dans le groupe comprenant les polycarbonates, les polydiméthylsiloxanes, les polyméthylmétacrylates, les polychlorobiphényles et les copolymères de cyclooléfines. Le métal peut être choisi par exemple dans le groupe constitué par Au, Ti, Pt, Al, Ni, Sn et l'alliage de métal peut être de l'acier inox.

Par surface active, on entend surface du substrat sur laquelle sont formées les zones de travail entourées par leur bordure. Selon l'invention, le substrat peut comporter une ou plusieurs surfaces actives. La surface active peut être constituée de tout matériau sensiblement non mouillant vis-à-vis de liquide d'intérêt et approprié pour mettre en oeuvre la présente invention. En effet, le fonctionnement du dispositif de la présente invention repose en partie sur le fait que la surface active ne retient pas ou très peu le liquide d'intérêt, ce qui permet un démouillage total, facile, sans rétention du liquide d'intérêt sur la surface entre les bordures, et ceci sans séchage. Ainsi, les gouttes de liquide d'intérêt sont capturées sélectivement et exclusivement par les bordures et sont circonscrites aux zones de travail qu'elles entourent, ce qui évite tout problème de contamination entre les gouttes, et donc entre les zones de travail.

Par surface sensiblement non mouillante vis-à-vis de liquide d'intérêt, on entend surface sur laquelle le liquide d'intérêt possède une faible adhérence, c'est à dire que si on fait couler le liquide d'intérêt sur une telle surface, il ne laisse pas de traces, ni de gouttes. Toutefois, la capture devient difficile, voire impossible, dans le cas où le liquide d'intérêt ne mouille absolument pas la surface. De la même façon, si la surface est totalement mouillante, il deviendra impossible d'aspirer le liquide d'intérêt. Ainsi, de préférence, la surface sensiblement non mouillante forme un angle de contact avec le liquide d'intérêt auquel le dispositif de l'invention est destiné de au moins 60°, de préférence de 60 à 90°. Par exemple, lorsque le liquide d'intérêt est aqueux, le matériau formant la surface active est avantageusement hydrophobe, avec de préférence un angle de contact de 60 à 110°

Aucune modification chimique de la surface du substrat n'est requise si le substrat est constitué d'un matériau déjà sensiblement non mouillant vis-à-vis du liquide d'intérêt.

En revanche, si la surface du substrat n'est pas déjà sensiblement non mouillante vis-à-vis du liquide d'intérêt, un traitement de surface peut être nécessaire pour la rendre sensiblement non mouillante. Dans ce cas, le matériau de la surface active est notamment choisi en fonction du liquide d'intérêt à partir duquel une matrice de gouttes doit être formée, en fonction du substrat, et aussi en fonction des zones de travail. Il peut être formé sur le substrat par modification chimique de la surface du substrat ou par dépôt sur cette surface d'un matériau sensiblement non mouillant vis-à-vis du liquide d'intérêt.

Par exemple, lorsque le liquide d'intérêt est aqueux, le matériau formant la surface active est avantageusement hydrophobe. Par exemple, dans les exemples de matériaux précités constituant le substrat, la surface du substrat peut être rendue non mouillante, ici hydrophobe, par modification chimique, par exemple par silanisation avec un silane porteur de fonctions hydrophobes, par exemple 1H, 1H, 2H, 2H-perfluorodécyl-trichlorosilane. Il peut s'agir par exemple aussi d'un dépôt de téflon liquide sur plateau tournant ; d'une silanisation en phase gazeuse de silane hydrophobe ; de l'utilisation de silane hydrocarboné, par exemple du type octadécyltrichlorosilane. Les matériaux et procédés utilisables pour la mise en oeuvre de telles modifications chimiques sont connus de l'homme du métier. Un exemple de réalisation est donné ci-dessous.

La forme et la taille de cette surface active, et donc aussi du substrat sur lequel elle est formée, n'ont pas d'importance pour le fonctionnement du dispositif de l'invention. Elles peuvent être déterminées par exemple en fonction du nombre de bordures couplées à des zones de travail formées sur celle-ci, et éventuellement de leur disposition sur cette surface, ainsi qu'en fonction de la taille désirée du dispositif tel qu'il sera utilisé et des spécifications de coût. Afin d'éviter des rétentions non souhaitables du liquide d'intérêt, entre les bordures, la surface du substrat comportant les zones de travail et leur bordure est de préférence plane. A titre d'exemple, la surface active peut avoir une forme et une taille comparables à celles utilisées dans les laboratoires sur puce et les microsystèmes d'analyse et de détection connus de l'homme du métier.

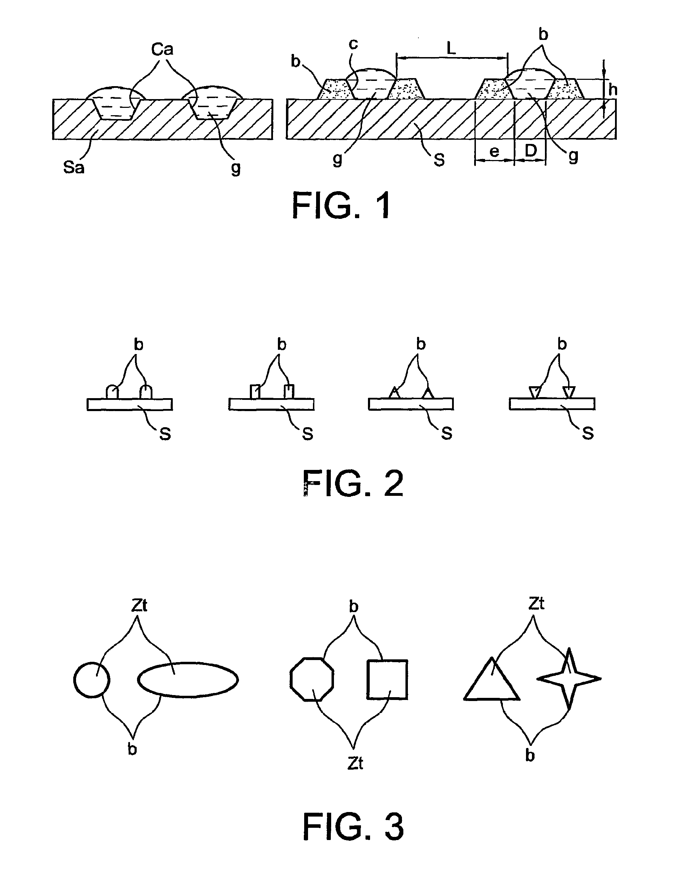

Selon l'invention, on entend par « bordures » des structures en relief formées sur le substrat de manière à créer des cuvettes non jointives. Ces cuvettes ne sont pas « enfoncées » dans le corps du substrat, mais sont constituées à sa surface par leur bordure. La figure 1 annexée est une représentation schématique en coupe de deux types de cuvettes : à gauche des cuvettes (cₐ) de l'art antérieur, « enfoncées » dans un substrat (Sₐ), et à droite des cuvettes (c) conformes à la présente invention, c'est à dire formées grâce à leur bordure (b) sur un substrat (S). Un espace libre reste donc disponible entre les bordures des cuvettes conformes à la présente invention pour des écoulements du liquide d'intérêt. Ces bordures permettent donc chacune une capture très localisée d'une goutte (g) du liquide d'intérêt. Le terme « localisé » est défini ci-dessus. Par exemple, dans une utilisation basique du dispositif, en faisant couler du liquide d'intérêt sur la surface active, de manière à couvrir ces bordures, et les cuvettes qu'elles forment, les bordures capturent, ou retiennent, une goutte de liquide d'intérêt dans la cuvette, alors que la surface active, sensiblement non mouillante vis-à-vis du liquide d'intérêt, ne retient pas ou très peu de liquide d'intérêt. En cessant l'écoulement du liquide d'intérêt, seule une goutte de ce liquide est retenue localement par bordure, sur la zone de travail qu'elle entoure.

La forme exacte des bordures, ou muret, n'est pas définitive et peut être adaptée suivant les applications et les moyens de fabrication disponibles pour leur fabrication. Selon l'invention, les bordures peuvent avoir n'importe quelle forme à condition qu'elles puissent capturer, ou emprisonner, chacune, une goutte du liquide d'intérêt, et que cette goutte soit en contact de la zone de travail entourée par ladite bordure. A titre d'exemple, les bordures peuvent avoir une section en coupe transversale, dans le sens de la surface active vers la partie haute de la bordure, choisie parmi une forme triangulaire, rectangulaire, conique, tronconique, de demi-cercle, de demi-ellipse. La figure 2 représente schématiquement, en coupe transversale, différentes géométries possibles de bordures (b) selon l'invention formées sur un substrat (S). A titre d'exemple également, les bordures peuvent avoir une forme, autour de leur(s) zone(s) de travail et vue du dessus, choisie parmi une forme annulaire, en étoile, en rectangle, en carré, en triangle, en ellipse, ou en polygone ayant de 4 à 20 côtés. La figure 3 est une représentation schématique de bordures (b) selon l'invention, en vues du dessus, ayant différentes formes autour de leur zone de travail (Zt) qu'elles entourent.

Le rapport entre la hauteur des bords et le diamètre des cuvettes est un facteur de contrôle de la bonne rétention d'une goutte de liquide d'intérêt dans les cuvettes. Lorsque les bordures sont trop élevés pour un diamètre donné, le liquide d'intérêt ne peut pas remplir les cuvettes formées par ces bordures et donc être retenu. A l'opposé, lorsque la hauteur des bordures est trop faible pour un diamètre donné, le liquide d'intérêt n'est pas retenu dans les cuvettes formées par ces bordures car elles ne peuvent pas jouer leur rôle d'obstacle à l'aspiration. Ainsi, à titre d'exemple, selon l'invention, les bordures se présentent avantageusement sous la forme d'anneau, éventuellement avec une des formes géométriques précitées, dont la hauteur (h) à partir de la surface active est de 5 à 20 µm ; dont la section (e) de l'anneau au niveau de la surface active est de 20 à 100 µm ; et dont le diamètre (D) à l'intérieur de la bordure, délimitant la zone de travail, est de 15 µm à 5 mm.

Selon l'invention, la surface active peut aussi être définie de la manière suivante (voir figure 1 à titre indicatif pour les références) :
D : diamètre intérieur des gouttes, avec, par exemple, 15 µm ≤ D ≤ 5mm ;
L : espacement entre gouttes ;
e : section du muret la plus large, avec, par exemple, 20µm ≤ e ≤ 100µm ; et
h : hauteur du muret, avec, par exemple, 5 µm ≤ h ≤ 20µm ;
   avec h/D < 0,15 ; e/D < 0,33 ; et h/L < 0,3.

Les bordures sont réalisées conformément aux règles suivantes : il s'agit de structures en relief sous forme de muret définissant un périmètre fermé, avec des bords non jointifs d'une bordure à l'autre. Ces bordures peuvent être fabriquées par tout procédé connu de l'homme du métier pour déformer les matériau précités constituant le substrat, ou par tout procédé connu de l'homme du métier pour former sur une surface des reliefs, en particulier dans le domaine des laboratoire sur puce et microsystèmes d'analyse, par exemple par dépôt de matériau(x) et gravure. A titre d'exemple, parmi les procédés connus de l'homme du métier utilisables pour fabriquer les bordures selon la présente invention, on peut citer les suivants : gravure directe du substrat ; dépôt d'un matériau à la surface d'un substrat plan, par exemple par couchage, évaporation, pulvérisation, ou dépôt électrochimique, puis gravure en conjonction avec un procédé classique de photolithographie, par exemple par couchage de résine, insolation et définition de motifs, ou gravure ; définition directe de motifs par photolithographie dans des polymères photosensibles, par exemple dans le cas de résines photosensibles ; moulage ou emboutissage, par exemple de matériaux plastiques ou du substrat formant la surface active.

La fabrication des bordures selon l'invention, peut en particulier s'effectuer durant la dernière étape d'un empilement technologique de plusieurs couches sur le substrat. Les couches inférieures pourront contenir des actionneurs ou des détecteurs mécaniques, optiques ou électroniques, par exemple de type MEMS ou MEMS optique ("Micro Electro Mechanical System") ou encore des molécules greffées d'intérêt chimique ou biologique destinés à former les zones de travail. Les cuvettes peuvent par exemple être disposées sur un damier, à la surface du substrat, de telle sorte qu'elles ne possèdent aucun bord en commun.

Selon l'invention, optionnellement, les bordures peuvent être mouillantes vis à vis de le liquide d'intérêt sur leur partie la plus haute par rapport à la surface active et/ou sur leur versant en regard avec la zone de travail qu'elle entoure. Cette option permet de renforcer, si nécessaire, la rétention de la goutte de liquide d'intérêt capturée par la bordure. Cette mouillabilité peut être obtenue, par exemple sur des bordures constituées de silicium, d'oxyde de silicium (SiO₂), de verre, de nitrure de silicium (Si₃N₄), c'est à dire de matériaux pouvant constituer le substrat, par greffage sur ce matériau d'une fonction chimique mouillante vis-à-vis du liquide d'intérêt auquel est destiné le dispositif de l'invention. Par exemple, la fonction chimique mouillante vis-à-vis d'un liquide d'intérêt aqueux peut être choisie dans le groupe constitué d'une fonction alcool, alcoolate, acide carboxylique, carboxylate, acide sulfonique, sulfonate, oxyamine, hydrazine, amine et ammonium.

Cette mouillabilité peut aussi être obtenue, lorsque le substrat est à base de silicium, par gravure pour former du silicium noir oxydé hydrophile qui ne nécessitera pas de modification chimique pour être mouillant vis-à-vis des solutions aqueuses. Ce mode de réalisation économique est donc préférentiellement utilisé lorsque le liquide d'intérêt est aqueux. Le document **[10]** présente un protocole utilisable pour exécuter ce mode de réalisation.

La nature de la surface, à l'extérieur des cuvettes, mais aussi avantageusement à l'intérieur des cuvettes, est un paramètre important pour permettre le bon fonctionnement global du dispositif de la présente invention. Le traitement de la surface du substrat pour le rendre sensiblement non mouillant peut être effectué avant ou après la formation des cuvettes, afin de modifier l'affinité des zones sur le substrat : entre les cuvettes et, avantageusement, en leur centre. Ainsi, l'aspiration du liquide d'intérêt est facilitée par une faible affinité entre le liquide d'intérêt et la surface entre les cuvettes. D'autre part, le centre des cuvettes peut avantageusement posséder une bonne affinité vis-à-vis de la phase liquide pour faciliter la capture d'une goutte de liquide d'intérêt au sein des cuvettes.

De manière tout à fait inattendue, les inventeurs ont remarqué que lorsque toute la surface du substrat, c'est à dire le centre des cuvettes formées par les bordures et la surface entre les cuvettes, possède une mauvaise affinité avec le liquide d'intérêt, notamment lorsqu'elle est sensiblement non mouillante vis-à-vis du liquide d'intérêt, la capture de la phase liquide dans les cuvettes lors de l'aspiration peut tout de même s'effectuer grâce à la présence des parois des cuvettes conformes à la présente invention, même si elles sont non mouillantes vis-à-vis du liquide d'intérêt. Ainsi, selon l'invention, les zones de travail peuvent être des zones non mouillantes vis-à-vis du liquide d'intérêt. Un autre avantage de cette invention est que la capture du liquide d'intérêt dépend beaucoup moins de l'état de la surface ou de son évolution dans le temps que pour les dispositifs de l'art antérieur. En effet, si l'affinité entre le centre de la cuvette et le liquide d'intérêt diminue au cours du temps, la capture reste assurée par la présence des bordures, ou murets conformes à la présente invention.

De préférence, selon l'invention, au moins une zone de travail est dans le même plan que la surface active, de préférence encore, toutes les zones de travail de la surface active. Les bordures étant réalisées autour des zones de travail, la fabrication du dispositif de la présente intention est ainsi facilitée.

Par zone de travail, on entend dans la présente invention une zone au niveau de laquelle des opérations physiques et/ou chimiques et/ou optiques peuvent être menées dans la goutte capturée par la bordure qui l'entoure (sa bordure). Ainsi, selon l'invention, au moins une zone de travail peut être une zone d'interaction choisie parmi une zone d'interaction électrique, chimique, mécanique, optique avec ladite goutte de liquide d'intérêt capturée, ou une zone au niveau de laquelle plusieurs de ces interactions sont utilisées simultanément ou successivement.

Ainsi, suivant une première forme de réalisation de l'invention, au moins une zone de travail peut être une zone d'interaction électrique, par exemple une microcellule électrochimique. Une microcellule électrochimique est un dispositif possédant au moins deux électrodes, préférentiellement coplanaires, formant une électrode de travail et une contre-électrode. Elle peut également posséder une électrode de référence. Ces éléments sont connus de l'homme du métier et les procédés de fabrication connus de l'homme du métier sont utilisables pour fabriquer cette zone de travail, par exemple le procédé décrit dans le document référencé **[7]**.

Grâce à cette forme de réalisation, le dispositif de la présente invention peut constituer un véritable microréacteur électrochimique qui utilise les gouttes de liquide d'intérêt capturées par les bordures comme milieux réactionnels, et plus précisément comme milieux électrochimiques. Chaque réacteur électrochimique (bordure + zone de travail sous forme de microcellule électrochimique + goutte de liquide d'intérêt capturée) suivant cette première forme de réalisation de la présente invention peut être utilisé pour réaliser toute réaction et/ou analyse électrochimique connue de l'homme du métier.

Ce réacteur peut servir par exemple à effectuer des réactions d'électropolymérisation localisée d'un ou de plusieurs monomère(s) présent(s) dans la goutte (polymérisation ou copolymérisation) et/ou d'électro-greffage localisé d'une ou de plusieurs molécule(s) chimique(s) présente(s) dans la goutte du liquide d'intérêt sur une des électrodes de la microcellule. Dans cet exemple, le liquide d'intérêt peut être un liquide contenant les réactifs nécessaires à l'électropolymérisation ou à l'électrogreffage désiré. La polymérisation et le greffage sont alors avantageusement localisés au niveau de la goutte du liquide d'intérêt capturée par la bordure. De telles réactions d'électropolymérisation ou greffage localisés peuvent être utilisées par exemple pour la fabrication de puces biologiques ou systèmes d'analyse.

Dans un exemple particulier, la microcellule électrochimique du dispositif de l'invention peut être utilisée d'abord pour « fabriquer » les zones de travail, et ensuite, par exemple pour utiliser ces zones de travail pour l'analyse des gouttes d'un liquide d'intérêt à analyser. Par exemple, si les zones de travail doivent comprendre un polymère organique fonctionnalisé par une sonde, par exemple une sonde biologique, elles peuvent être fabriquées par électropolymérisation d'un polymère conducteur fonctionnalisé par une sonde, par exemple suivant le procédé décrit dans le document référencé **[5]**. La particularité liée à l'utilisation du dispositif de l'invention est qu'on utilise les bordures pour capturer de manière localisée sur chaque zone de travail une première goutte d'un premier liquide d'intérêt contenant les réactifs nécessaires à l'électropolymérisation (monomère organique). La fonctionnalisation par la sonde, peut être réalisée simultanément à l'électropolymérisation, le premier liquide d'intérêt contient alors aussi la sonde (par exemple monomère fonctionnalisé par la sonde). La fonctionnalisation peut aussi être réalisée postérieurement à l'électropolymérisation au moyen d'une deuxième goutte d'un deuxième liquide d'intérêt (contenant la sonde) capturée par les mêmes bordures et, de ce fait localisée sur les mêmes zones de travail. En outre, les zones de travail ainsi fabriquées peuvent ensuite être séchées, et elles peuvent servir, toujours grâce à leur bordure qui les entoure, à capturer une goutte d'un troisième liquide d'intérêt à analyser, contenant une cible qui interagit avec la sonde (par exemple oligonucléotides complémentaires). Un quatrième liquide d'intérêt peut encore être utilisé pour analyser (détection et/ou dosage) l'interaction sonde/cible sur lesdites zones de travail, et ainsi de suite.

Le microréacteur électrochimique selon l'invention peut servir par exemple aussi à effectuer des analyses électrochimiques, qualitatives et/ou quantitatives, d'analytes présents dans les gouttes capturée par les bordures. Il peut servir par exemple aussi à effectuer des analyses électrochimiques, qualitatives et/ou quantitatives, d'une interaction moléculaire sonde/cible, la sonde étant fixée sur les zones de travail, et la cible se trouvant dans les gouttes du liquide d'intérêt capturées.

Dans un exemple particulier, où la microcellule électrochimique d'un dispositif de la présente invention est utilisée pour détecter une cible présente dans un échantillon liquide, par exemple en mettant en jeu une interaction de la cible à détecter avec une sonde spécifique fixée sur les zones de travail, il est possible de détecter électrochimiquement ladite interaction par exemple avec amplification du signal par accumulation enzymatique dans une goutte d'un liquide d'intérêt, contenant un substrat enzymatique, capturée par la bordure qui entoure chaque zone de travail. Le document **[4]** expose un protocole opératoire utilisable pour ce type de détection, avec le dispositif de la présente invention.

La détection d'une interaction sonde/cible sur une zone de travail peut faire intervenir un des autres moyens connus de l'homme du métier que la cellule électrochimique, par exemple un de ceux exposés dans la présente description, par exemple un procédé optique. La microcellule électrochimique peut donc servir dans ce cas uniquement à « fabriquer » les zones de travail, la détection d'une interaction sonde/cible étant ensuite effectuée par un autre moyen, ou alors à analyser une interaction sonde/cible, la fabrication des zones de travail étant réalisée par un autre procédé, par exemple un de ceux connus de l'homme du métier dans le domaine des puces biologiques.

Quelle que soit la mise en oeuvre de cette forme de réalisation caractérisée par la présence d'une microcellule électrochimique, lorsqu'une sonde est utilisée sur les zones de travail, elle peut être choisie par exemple dans le groupe constitué par une enzyme, un substrat d'enzyme, un oligonucléotide, un oligonucléoside, une protéine, un récepteur membranaire d'une cellule eucaryote ou procaryote, un anticorps, un antigène, une hormone, un métabolite d'un organisme vivant, une toxine d'un organisme vivant, polynucléotide, polynucléoside, ADN complémentaire, ou un mélange de celles-ci. Elle est bien entendu choisie en fonction de la cible avec laquelle elle devra interagir.

Suivant une deuxième forme de réalisation de l'invention, au moins une zone de travail peut être une zone d'interaction chimique avec la goutte de liquide d'intérêt capturée, sans microcellule électrochimique. Cette zone de travail peut par exemple comporter des fonctions ou des réactifs chimiques ou biologiques prêts à réagir avec une cible de ces fonctions ou de ces réactifs présente dans un liquide d'intérêt. De même que pour la première forme de réalisation, le dispositif de l'invention peut servir dans un premier temps à placer ces fonctions ou ces réactifs sur des zones de travail, et dans un deuxième temps, après séchage, à capturer une goutte de liquide d'intérêt contenant, la cible de ces fonctions ou de ces réactifs.

Cette, au moins une, zone de travail peut être choisie parmi celles connues de l'homme du métier dans le domaine des puces biologiques (puces commercialisées par AGILENT, CIPHERGEN, EUROGENTEC). La différence du dispositif de la présente invention avec ces puces de l'art antérieur réside surtout en la présence d'une bordure entourant chaque zone de travail et permettant de capturer une goutte de liquide d'intérêt. Cette, au moins une, zone de travail peut être fabriquée par exemple par silanisation puis immobilisation de sondes biologiques comme cela est décrit par exemple dans le document référencé **[8]**.

Cette, au moins une, zone de travail peut être par exemple une zone comportant un polymère fonctionnalisé par une sonde biologique telles que celles précitées, dans le but de fixer une cible correspondante susceptible d'être présente dans un liquide d'intérêt pour la détecter, par exemple optiquement. Par exemple, sur un substrat tels que ceux précités, cette, au moins une, zone de travail peut être obtenue selon les méthodes décrites dans le document référencé **[9]**.

Suivant une troisième forme de réalisation de l'invention, au moins une, zone de travail peut posséder des dispositifs actifs ou de mesure, tels que des capteurs ou des actionneurs. Cette forme de réalisation peut s'ajouter aux formes de réalisation et variante précitées, ou être exclusive suivant l'objectif visé dans la mise en oeuvre de la présente invention. Les dispositifs actifs ou de mesure sont avantageusement situés au centre de la surface des zones de travail délimitées par une bordure.

Lorsqu'une zone de travail comprend un capteur, il peut être choisi par exemple dans le groupe constitué des capteurs électriques, magnétiques, électrostatiques, mécaniques (par exemple capteur de pression), thermiques (par exemple capteurs de température), optiques (par exemple dispositif de détection optique) et chimiques.

Lorsqu'une zone de travail comprend un actionneur, il peut être choisi par exemple dans le groupe constitué des actionneurs optiques (source lumineuse), électriques, magnétiques, électrostatiques, mécaniques (déplacement mécanique), thermiques (résistance chauffante) et chimiques.

De tels capteurs et actionneurs, utilisables pour la mise en oeuvre de la présente invention, ainsi que leur procédé de fabrication sont connus de l'homme du métier, notamment dans le domaine des microsystèmes. La encore, la différence du dispositif de la présente invention avec ces puces de l'art antérieur réside en particulier en la présence de la bordure entourant chaque zone de travail.

Quelle que soit la forme de réalisation du procédé de la présente invention, plusieurs zones de travail entourées chacune par une bordure selon l'invention peuvent être disposées sur un substrat. Dans une application courante, par exemple pour la fabrication d'un laboratoire sur puce, ou d'un microsystème, le nombre de zones de travail entourées chacune par une bordure peut être, à titre d'exemple uniquement, de 16 à 3025 par cm² de surface active. Suivant une variante de la présente invention, plusieurs zones de travail peuvent être entourées par une seule bordure, par exemple de 2 à 4 ou plus, pourvu que lorsqu'une goutte de liquide d'intérêt est capturée par la bordure, cette goutte recouvre, au moins partiellement, toutes les zones de travail qui sont entourées par cette bordure.

De manière générale, grâce au dispositif de la présente invention, différentes gouttes constituées de différents liquides d'intérêt peuvent être capturées successivement par une même bordure et à différentes fins, par exemple pour réaliser des étapes successives d'un protocole de fabrication de la zone de travail qu'elle entoure, par exemple aussi pour réaliser des étapes successives de détection et/ou de dosage d'un analyte dans un liquide d'intérêt. L'avantage lié à la présente invention est que quel que soit l'objectif des captures successives de gouttes de liquides d'intérêt, les gouttes capturées successivement sont toutes localisées sur les zones de travail, grâce à leur bordure respective.

Le dispositif de l'invention comprend également une boîte de travail. Cette boîte de travail est une boîte utilisée pour couvrir la surface active du dispositif de l'invention avec le liquide d'intérêt. Cette boîte peut permettre en outre de confiner la surface active et/ou d'effectuer des analyses sur ou dans les gouttes capturées sur les zones de travail. Dans ces deux derniers cas, le dispositif de la présente invention constitue alors un véritable laboratoire miniature.

Le dispositif de la présente invention peut être utilisée dans des microsystèmes, tels que des microsystèmes d'analyse, ou former une puce biologique par exemple choisie dans le groupe constitué des puces à acide nucléique, à anticorps, à antigènes, à protéine et à cellules.

Les dimensions de cette boîte dépendent notamment des dimensions du substrat muni de sa surface active qui doit être introduit dans celle-ci, mais aussi, le cas échéant, d'autres dispositifs d'analyse ou microsystèmes qui peuvent être joints dans ladite boîte, par exemple d'autres laboratoires sur puce. Elles peuvent descendre en dessous du cm pour leur côté le plus grand.

La boîte peut être constituée par exemple d'un matériau choisi dans le groupe constitué par un polymère organique, une matière plastique élastomère, un verre, du métal, du silicium, une résine photosensible, ou par tout matériau connu de l'homme du métier et permettant la mise en oeuvre de la présente invention. Par exemple, il peut s'agir d'un polymère choisi dans le groupe comprenant les polycarbonates, les polydiméthylsiloxanes, les polyméthylmétacrylates, les polychlorobiphényles et les copolymères de cyclooléfines.

Le matériau de la boîte est généralement choisi en fonction de la nature du liquide d'intérêt à introduire dans la boîte, de l'utilisation de la boîte (simplement couverture du substrat par le liquide d'intérêt pour former la matrice de gouttes ou couverture et analyses ou autre (réactions chimiques, électrochimiques ou biochimiques) et en fonction des spécifications de coût du fabriquant. Il peut s'agir d'un matériau identique au substrat du dispositif de l'invention ou différent.

La boîte est de préférence suffisamment étanche pour éviter par exemple les fuites lors de l'introduction dans celle-ci du liquide d'intérêt et/ou les contaminations pouvant provenir de l'extérieur de la boîte, par exemple bactérienne, chimiques, etc. et/ou l'évaporation des gouttes capturées par les bordures entourant les zones de travail du dispositif de la présente invention.

Selon un mode de réalisation particulier de la boîte, lorsque le substrat et la boîte sont constitués d'un même matériau, le substrat peut constituer une des parois de la boîte, la surface active étant dirigée vers l'intérieur de la boîte.

Les parois de la boîte peuvent être montées à partir de, et sur, la surface active du dispositif de l'invention, par exemple par collage ou compression.

La boîte de travail peut comprendre un capot pour son montage, mais aussi, dans certaines applications, pour l'ouvrir ou la fermer, notamment afin de pouvoir retirer de celle-ci le substrat de l'invention avec sa surface active après l'avoir mis en contact avec le liquide d'intérêt, ou après les analyses ou réactions dans les gouttes. En effet, une seule boîte peut également servir pour immerger en même temps ou successivement un, ou, suivant sa conception, plusieurs substrats selon l'invention. La boîte peut alors comprendre des moyens de fixation amovibles, par exemple des clips, du, ou des, substrats à l'intérieur de celle-ci. Si la boîte comprend un capot, il est de préférence suffisamment étanche pour ne pas perturber l'introduction du liquide d'intérêt dans la boîte.

Le capot peut être constitué d'un matériau tel que ceux précités pour la boîte. Il peut être fabriqué par exemple par moulage, par emboutissage, par gravure ou par érosion mécanique, etc. Il peut ensuite être fixé définitivement sur la boîte pour la fermer, par exemple par collage, compression, plaquage ou par tout autre moyen connu de l'homme du métier et assurant la tenue et l'étanchéité requise pour l'utilisation de celle-ci. Il peut aussi être fixé sur la boîte de manière amovible, toujours en assurant la tenue et l'étanchéité requise pour l'utilisation de celui-ci, afin que la même boîte ainsi constituée puisse servir à disposer des matrices de gouttes sur plusieurs substrats différents selon l'invention, et/ou avec différents liquides d'intérêt.

De préférence, le matériau de la boîte, et, le cas échéant, de son capot, est, à l'intérieur de celle-ci, sensiblement non mouillant vis-à-vis du liquide d'intérêt. En effet, ceci permet d'éviter que des gouttes adhèrent aux surfaces internes de la boîte, après l'extraction du liquide d'intérêt, et retombent sur la surface active et viennent gêner les analyses et réactions sur les zones de travail dans les gouttes capturées par les bordures. Des traitements de surface peuvent être nécessaires pour obtenir ce résultat, comme pour la surface active du dispositif de l'invention. Ces traitements peuvent être par exemple ceux précités pour la fabrication de la surface active.

La boîte de la présente invention peut être munie de moyens d'introduction du liquide d'intérêt dans ladite boîte et d'extraction de liquide d'intérêt de ladite boîte. Ces moyens peuvent comprendre par exemple deux ouvertures. Il n'y a pas de limitation dans la position, la forme, le nombre, et la fonction de ces ouvertures autres que celles-ci : elles doivent permettre l'introduction puis l'extraction du liquide d'intérêt de la boîte, et elles doivent être disposées de telle manière que lorsque le liquide d'intérêt est introduit dans la boîte, il couvre la ou les bordures de la surface active, et lorsque le liquide d'intérêt est extrait de la boîte, une goutte du liquide d'intérêt reste captive par bordure. Le liquide d'intérêt peut entrer puis sortir de la boîte par deux ouvertures différentes. Il peut aussi entrer puis sortir de la boîte par une seule de deux ouvertures, une deuxième ouverture servant à autoriser l'extraction du liquide d'intérêt, soit en laissant passer l'air appelé par l'extraction du liquide d'intérêt, soit en injectant par cette deuxième ouverture un fluide gazeux permettant de pousser le liquide d'intérêt hors de la boîte.

Les moyens d'introduction et d'extraction du liquide d'intérêt de la boîte comprennent notamment des ouvertures qui peuvent être disposées sur le capot ou sur les parois de la boîte, par exemple par gravure, emboutissage, moulage, exposition à la lumière pour une résine photosensible, perçage mécanique, etc.

Les moyens d'introduction du liquide d'intérêt dans la boîte peuvent comprendre tout moyen approprié connu de l'homme du métier pour injecter un liquide dans une boîte, notamment ceux utilisés dans le domaine des laboratoires sur puce et des microsystèmes. Ces moyens d'introduction peuvent être choisis par exemple parmi une seringue, une pipette, une micropipette, ou une pompe d'injection, etc.

Les moyens d'extraction du liquide d'intérêt de la boîte peuvent comprendre tout moyen approprié connu de l'homme du métier pour extraire un liquide d'une boîte, notamment ceux utilisés dans le domaine des laboratoires sur puce et des microsystèmes. Ces moyens d'extraction peuvent être par exemple une pompe d'extraction, manuelle ou automatique.

Par exemple, selon l'invention, lorsque le moyen d'extraction du liquide d'intérêt comprend une pompe d'extraction, celle-ci peut être sous la forme d'une pompe d'injection d'un fluide gazeux dans la boîte, par une première ouverture formée sur la boîte, de manière à pouvoir injecter dans la boîte un fluide gazeux chassant le liquide d'intérêt de la boîte par une deuxième ouverture formée sur la boîte. Avantageusement, la pompe d'injection du fluide gazeux comprend en outre un dispositif de saturation du fluide gazeux injecté en vapeur du liquide d'intérêt. Cette saturation permet d'éviter ou de limiter l'évaporation de la, ou des, goutte(s) capturée(s) par les bordures.

Par exemple aussi, lorsque le moyen d'extraction comprend une pompe aspirante, celle-ci peut être sous la forme d'une pompe aspirante disposée au niveau d'une ouverture formée sur la boîte de manière à pouvoir extraire le liquide d'intérêt de la boîte en l'aspirant par cette ouverture. Avantageusement, une deuxième ouverture peut être aménagée sur la boîte de manière à permettre l'introduction d'un fluide gazeux, par exemple de l'air, un gaz neutre, ou un fluide gazeux saturé en vapeur du liquide d'intérêt, par l'appel d'air provoqué par l'aspiration du liquide d'intérêt.

La présente invention se rapporte également à un procédé de fabrication d'un dispositif selon l'invention, ledit procédé comprenant les étapes suivantes :
- fournir un substrat
- former des zones de travail sur ledit substrat,
- structurer la surface du substrat de manière à former une bordure autour des zones de travail,
- traiter la surface sur laquelle les zones de travail et leur bordure ont été formées pour la rendre sensiblement non mouillante vis-à-vis du liquide d'intérêt,
- fournir une boîte et y introduire le substrat comprenant les zones de travail entourées par leur bordure, ladite boîte comprenant des moyens pour introduire le liquide d'intérêt dans la boîte et des moyens pour extraire le liquide d'intérêt de la boîte, et
- fermer ladite boîte.

Le substrat, la formation des zones de travail, la structuration de la surface destinée à former les bordures autour des zones de travail, le traitement de la surface du substrat destiné à la rendre sensiblement non mouillante, sont déjà définis ci-dessus.

Il est bien entendu, au vu de la présente description, que le procédé de l'invention inclut la formation simultanée ou successive de plusieurs zones de travail et bordures respectives autour de celles-ci.

Les différents matériaux et étapes de ce procédé ont déjà été décrits ci-dessus.

Le déroulement du procédé permettant la capture d'une goutte du liquide d'intérêt par cuvette formée par une bordure, sur la surface active dans la boîte de travail, peut être schématisé de la manière suivante :
- remplissage total ou partiel de la boîte, ou chambre fluidique, par le liquide d'intérêt de manière à couvrir la ou les zone(s) de capture, puis
- extraction du liquide d'intérêt de la boîte.
   Seule(s) la ou les zones de capture retiennent chacune une goutte du liquide d'intérêt, la surface active étant non mouillante. Plus aucun appareillage coûteux de dispense de gouttes n'est nécessaire. De plus, le nombre de zones de travail n'est plus limité par les limites de ces appareils.
   Les inventeurs de la présente invention ont également remarqué que, de manière surprenante, l'extraction du liquide d'intérêt s'effectue plus facilement que sur un substrat de l'art antérieur où les bords des cuvettes - qui n'en sont pas réellement car la surface de ces substrats est creusée pour former les cuvettes, mais aucune bordure n'est formée au sens de la présente invention - sont jointifs, car les zones dégagées entre les cuvettes forment autant de canaux pour l'écoulement d'un fluide. D'autre part, la disposition particulière des zones de travail et bordures de la présente invention, conjuguée à la fabrication en relief sur la surface, permet d'éviter toute communication du liquide d'une cuvette à une autre, une fois l'aspiration effectuée.
   L'utilisation du dispositif de la présente invention est très souple, car il est possible de faire intervenir successivement une opération qui se déroule collectivement, puis des opérations individuelles au niveau de chacune des gouttes formées. Ainsi, dans une première opération, dite collective, le dispositif de l'invention permet le passage d'une veine fluidique du liquide d'intérêt, par exemple injectée dans ladite boîte, à une matrice de gouttes, ou micro-volumes, indépendantes les unes des autres. Ensuite, des procédés de détection et/ou de réactions chimiques ou biochimiques connues de l'homme du métier peuvent être mis en oeuvre individuellement (opération individuelle), en parallèle, ou successivement, dans chacune des gouttes capturées par les bordures pour détecter et analyser des cibles présentes dans le liquide d'intérêt.
   Dans des procédés à plusieurs étapes utilisant le dispositif de l'invention, il n'est pas nécessaire que toutes les étapes conduisent à la formation de gouttes. En effet, rien n'empêche que certaines étapes soient réalisées en couvrant la totalité des bordures par un liquide puis en vidant la boîte de ce liquide de telle manière qu'il ne reste pas de gouttes captives par les bordures, par exemple par injection dans la boîte d'un gaz sous pression, par agitation énergique, etc.
   Il est par ailleurs possible de capturer successivement différentes gouttes d'un ou de plusieurs liquides d'intérêt sur une même zone de travail grâce à la bordure qui l'entoure. Chaque liquide d'intérêt peut contenir un ou plusieurs réactif(s) nécessaire(s) par exemple pour réaliser une des étapes d'un procédé de chimie ou biochimie, par exemple pour fabriquer les zones de travail et/ou ou pour effectuer des analyses. La succession des différentes gouttes sur une même zone de travail permet par exemple de réaliser différentes étapes successives d'un procédé mis en oeuvre sur le dispositif de l'invention, et, plus particulièrement sur les zones de travail entourées par leur bordure. L'ensemble de ces étapes de procédé est donc avantageusement localisé sur les zones de travail grâce à leur bordure.
   Dans des expérimentations liées à la mise en oeuvre de la présente invention, les inventeurs ont noté que le dispositif de l'invention résout encore d'autres problèmes techniques, par rapport aux techniques de l'art antérieur, dans le domaines des laboratoires sur puce, puces biologiques et microsystèmes. En particulier, il existe dans l'art antérieur un certain nombre de méthodes de greffage covalent localisé de molécules biologiques pour fonctionnaliser des surfaces de puce biologique. Cette localisation est en général réalisée par voie chimique, photochimique ou bien électrique. Par voie chimique, l'immobilisation d'un élément biologique (sonde) se fait par dépôt localisé (« spotting ») ou synthèse in situ ce qui est contraignant en termes de temps. Par voie photochimique, il est possible de réaliser des synthèses d'oligonucléotides à l'aide de groupements photolabiles **[4]** : Ici encore, des limitations en termes de temps de synthèse et de volumes de réactifs coûteux sont souvent rencontrées. De plus, des réactions radicalaires non sélectives peuvent avoir lieu. Par voie électrique, la synthèse d'oligonucléotides sur support solide avec groupement électro-labile rencontre les mêmes limitations. Par voie électrochimique [3], par copolymérisation de pyrrole et de pyrrole porteur d'une espèce biologique sur une électrode métallique. Cette dernière technique présente l'inconvénient de requérir des volumes importants de réactifs coûteux (pyrrole porteur de l'espèce biologique).
   Le dispositif de la présente invention permet de résoudre ces nombreux problèmes de l'art antérieur. En effet, il permet de fonctionnaliser rapidement et précisément des surfaces de puces biologiques, qui sont devenues dans la présente invention les zones de travail, grâce à une localisation rapide et précise de chaque goutte du liquide d'intérêt sur la ou les zone(s) de travail, et un contrôle précis des densités de sondes immobilisées. En outre, par rapport aux procédés de l'art antérieur, les volumes de réactifs utilisés sont nettement moins importants du fait de la localisation précise de la réaction dans le volume des gouttes de réactifs capturées par les zones de capture. En outre, les expérimentations des inventeurs ont montré que le dispositif de la présente invention permet de travailler en micro-volumes indépendants les uns des autres, sans contamination croisée entre les plots de détection, ce qui augmente considérablement la précision et la reproductibilité des analyses.
   Ainsi, la présente invention permet entre autre une mesure électrochimique ou optique en milieu confiné, dans les gouttes capturées par les bordures, mais également une fonctionnalisation localisée sur la zone de travail par voie électrochimique ou chimique avec des réactifs coûteux : le volume des réactifs est réduit à la vraie zone utile formée par chaque zone de travail entourée par sa bordure selon l'invention.
   Cette invention trouve actuellement son plus grand intérêt dans les applications laboratoire sur puce et microsystèmes. La présente invention se rapporte donc également à une puce biologique, par exemple choisie dans le groupe constitué des puces à acide nucléique, des puces à anticorps, des puces à antigènes, des puces à protéine et des puces à cellules.
   Selon l'invention, des détections de différentes molécules susceptibles d'être présentes dans le liquide d'intérêt peuvent être réalisées en parallèle, simultanément ou successivement, dans différentes gouttes de liquide d'intérêt captives sur ladite surface active dans la boîte.
   Selon l'invention, le, au moins un, analyte à détecter peut être choisi par exemple parmi les molécules biologique ou chimique. Les molécules biologiques peuvent être choisies par exemple dans le groupe constitué par une enzyme, un substrat d'enzyme, un oligonucléotide, un oligonucléoside, une protéine, un récepteur membranaire d'une cellule eucaryote ou procaryote, un virus, un anticorps, un antigène, une hormone, un métabolite d'un organisme vivant, une toxine d'un organisme vivant, un nucléotide, un nucléoside, un ADN complémentaire. La molécule chimique peut être toute molécule qui doit être analysée qualitativement et/ou quantitativement.
   D'autres caractéristiques et avantages apparaîtront encore à l'homme du métier à la lecture des exemples qui suivent donnés à titre illustratif et non limitatif en référence aux figures annexées.

### Brève description des figures

- La figure 1 est une représentation schématique en coupe de deux types de cuvettes : à gauche les cuvettes de l'art antérieur, et à droite les cuvettes conformes à la présente invention.
- La figure 2 est une représentation schématique en coupe de différentes formes géométriques de bordures conformes à la présente invention.
- La figure 3 est une représentation schématique de bordures selon l'invention, en vues du dessus, ayant différentes formes autour des zones de travail respectives qu'elles entourent.
- La figure 4 est un schéma représentant en coupe transversale un dispositif conforme à la présente invention et son fonctionnement pour la création d'une matrice de gouttes grâce à la surface active de son substrat.
- La figure 5 est un schéma représentant en coupe transversale un dispositif conforme à la présente invention dans lequel les moyens d'introduction du liquide d'intérêt dans la boîte et d'extraction du liquide d'intérêt de la boîte utilisent une même ouverture de la boîte.
- La figure 6 est un schéma en vue du dessus, réalisé à partir de photographies expérimentales, d'une surface active selon l'invention montrant la formation d'une matrice de gouttes : à gauche la surface sans gouttes avant que le liquide d'intérêt soit introduit dans le dispositif de la présente invention, et à droite, la surface avec la matrice de gouttes retenue par les bordures (b) lorsque le liquide d'intérêt a été extrait de la boîte.
- La figure 7 est une photographie d'un mode de réalisation du dispositif de l'invention dans lequel une bordure de résine entoure chaque zone de travail, et dans lequel les zones de travail sont des microcellules électrochimiques. Le diamètre extérieur de la couronne de résine entourant la cellule électrochimique du dispositif photographié est dans la réalité de 700µm.
- La figure 8 est un graphique de courbes de voltamétrie cyclique mesurant l'intensité (I(µA)) en fonction du potentiel (mV) avant (Av) la formation d'une matrice de gouttes et après (Ap) la formation d'une matrice de gouttes sur un dispositif conforme à la présente invention dont la surface active est représentée en agrandissement sur la figure 7.
- La figure 9 est une représentation schématique de différents modes de réalisations possibles d'une boîte de travail selon l'invention, en particulier elle représente des exemples de dispositions des moyens d'introduction et d'extraction de liquide d'intérêt de la boîte sur différentes boîtes de travail conformes à la présente invention.

### EXEMPLES

### Exemple 1 : Fabrication de zones de capture constituées de bordures

Sur une plaque neuve de silicium est effectuée une étape de photolitographie avec une résine épaisse photosensible Clariant AZ4562 (marque de commerce) de la manière suivante :
- dépôt d'un promoteur d'adhérence, qui est ici de l'hexaméthylènedisilazane, en four à 120°C,
- couchage de résine sur tournette à 1000 tour/minute pendant 30 s avec une accélération de 200 tours/minute/s,
- recuit sur plaque chauffante 115°C pendant 2 minutes,
- insolation sur machine d'insolation Karl Süss MA750 (marque de commerce) pendant 50 s en mode discontinu (5x10 secondes avec 5 secondes de pause) à travers un masque,
- développement dans une solution Shipley MF319 (marque de commerce) diluée dans les proportions 1:3 avec de l'eau désionisée,
- rinçage à l'eau désionisée et séchage sous flux d'azote,
- recuit sur plaque chauffante à 115°C pendant 3 minutes, puis à 150°C pendant 1 minute,
- mesure d'épaisseur : 13 µm.

Sur le masque utilisé pour l'insolation, tous les motifs représentent des anneaux dont les murets ont une largeur de 35 µm avec des combinaisons variées entre leur diamètre (100 à 1000 µm) et la distance inter-centre entre deux couronnes (50 à 1000 µm).

3025 cuvettes sur une surface de 1 centimètre carré ont pu être obtenues aisément.

### Exemple 2 : Fabrication de la boîte

Un capot creux en polydiméthylsiloxane (PDMS) est fabriqué par moulage sur un moule en verre avec un motif carré en surépaisseur de 1 mm. Sur un dispositif plan comme ceux obtenus dans l'exemple précédent, ce capot creux est fixé de manière hermétique par collage avec de la colle réticulant par insolation aux rayons ultraviolets (VITRALIT 6181). Les connexions pour les entrées et sorties des fluides sont réalisées par perçage du capot avec des aiguilles de faible diamètre. L'aiguille d'entrée est reliée à des tubes de transport de fluide et à une seringue pleine du liquide d'intérêt. L'ensemble final est testé pour les fuites, sachant que le liquide doit passer uniquement par les connexions prévues à cet effet.

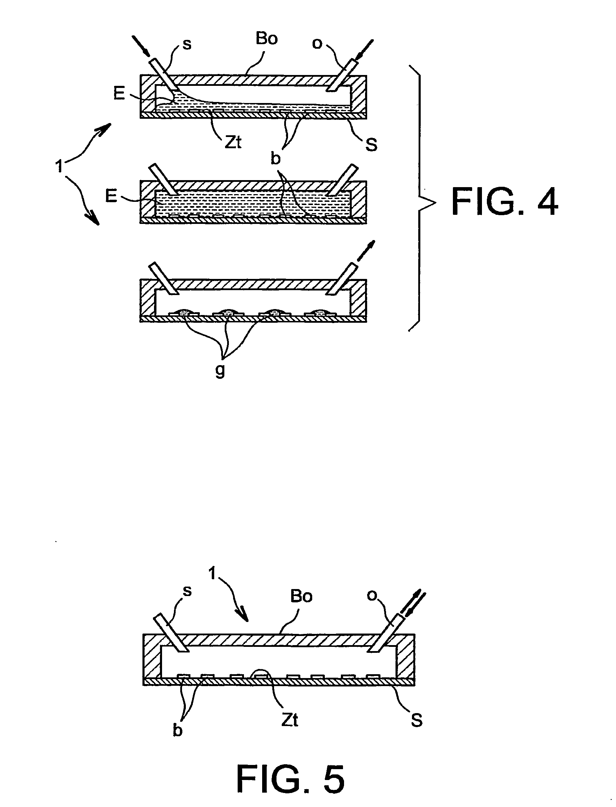

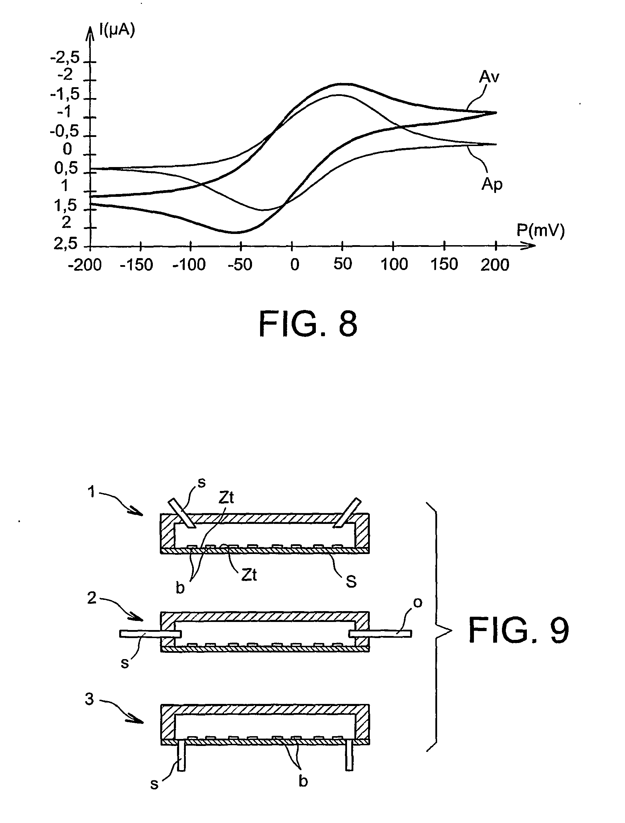

La figure 4 est une représentation schématique de la boîte obtenue dans cet exemple. D'autres dispositions des connexions d'entrée et de sortie (o, s) d'introduction et d'extraction d'un liquide d'intérêt peuvent facilement être réalisées suivant cet exemple, et la figure 9 représente schématiques des boîtes pouvant être obtenues.

Sur la figure 4 annexée, la boîte (B) selon l'invention comporte des ouvertures (o, s). Les zones de travail (Zt) et bordures (b) sont également représentées.

### Exemple 3 : Capture d'eau désionisée sur une surface de silicium avec oxyde natif

Différents types de motifs formant des bordures selon l'invention, représentés sur les figures 1 à 3 annexées, et obtenus par le procédé décrit dans l'exemple 1, sont testés avec de l'eau désionisée (EDI).

Pour cela, des capots avec une veine fluidique d'épaisseur voisine de 1 mm constituée grâce à une boîte de travail selon l'invention, fabriquée suivant l'exemple 2 (figure 4 annexée) sont utilisés pour permettre l'injection puis l'aspiration d'EDI, via des tubes en plastique.

La surface initiale, constituée de silicium avec une couche d'oxyde natif n'a pas été traitée et l'angle de contact est voisin de 68° avec de l'EDI.

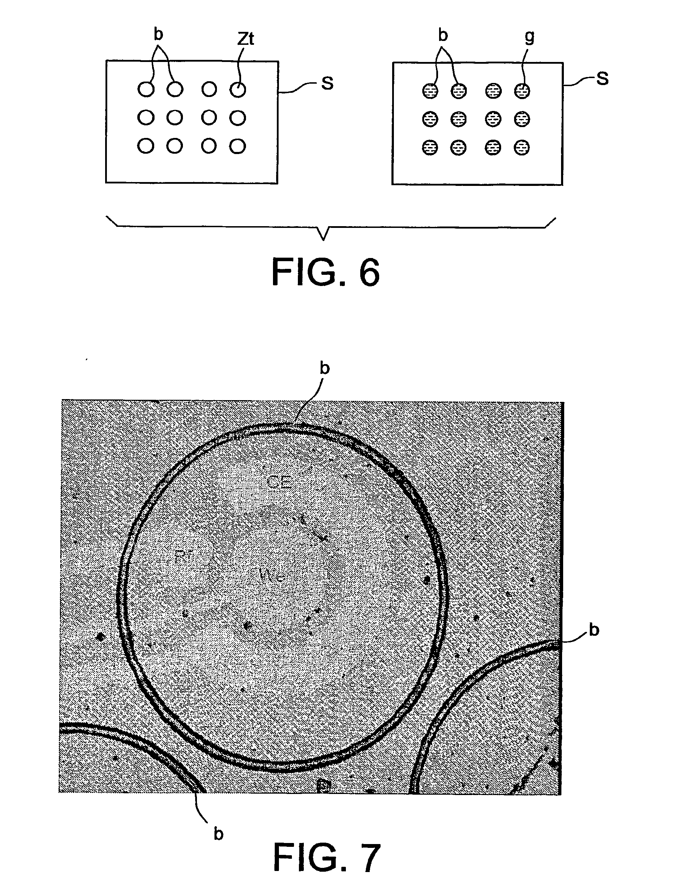

Comme le montre la figure 6 annexée, à droite, l'EDI reste retenue dans les cuvettes formée par les bord (b), sur la zone de travail (Zt), sous forme de gouttes (g) après aspiration du liquide d'intérêt.

Différents modes de remplissage de la boîte par le liquide d'intérêt ont été testés : avec introduction et extraction du liquide d'intérêt par la même ouverture (figure 5 annexée), et introduction par une ouverture et extraction par une autre ouverture (figure 4). Une matrice de gouttes est obtenue à chaque fois.

En outre, il a été noté que le remplissage de la boîte n'est pas obligatoire, l'essentiel est que les bordures soient recouvertes par le liquide d'intérêt.

Cet exemple montre qu'une matrice de gouttes (g) bien localisées sur les zones de travail est obtenue grâce à ce dispositif conforme à la présente invention. La présente invention répond donc à l'ensemble des besoins précités de l'art antérieur.

### Exemple 4 : fabrication de zones de travail fonctionnalisées par une sonde selon l'invention

Un empilement technologique utilisant des techniques courantes de microélectronique permet de former des électrodes sur une plaque de silicium par dépôt de métal puis photolithographie puis gravure localisée.

Dans cet exemple, une microcellule comprenant trois électrodes est fabriquée et utilisée. Sur un substrat de Si avec une couche de SiO₂ de 300 nm, réalisation d'étapes standards pour l'homme du métier de la microélectronique :
- dépôt de 300 nm de platine (Pt) par pulvérisation ;
- photolithographie dans une résine photosensible avec ouverture des motifs de la microcellule et des bandes d'arrivée de courants ;
- dans un réacteur à plasma, gravure ionique complète du Pt dans les zones sans résine ;
- retrait de la résine dans un bain d'acide nitrique ;
- dans un réacteur à plasma, dépôt chimique en phase vapeur de 500nm de SiO₂ ;
- photolithographie dans une résine photosensible avec ouverture des motifs des électrodes de la microcellule ;
- dans un réacteur à plasma, gravure ionique complète de 500nm de SiO₂ dans les zones sans résine ; et
- retrait de la résine dans un bain d'acide nitrique.

L'électrode de travail (We) et la contre-électrode (CE) sont en platine (dépôt 5000 Å environ) (voir figure 7).

Une électrode de référence Ag/AgCl/Cl⁻ (Rf) est également présente. Cette électrode est obtenue par dépôt d'argent sur le platine avec le protocole suivant :
- préparation de 10 ml de solution contenant AgNO₃ 0,2 M, Kl 2 M, Na₂S₂O₃ 0,5 mM.
- potentiel de -0,65 V vs ECS (électrode au calomel saturé) est imposé pendant 90 secondes (suivi par chronoampérométrie) sur l'électrode de référence. Un dépôt gris/blanc est obtenu. Le substrat est ensuite rincé à l'eau.
- Le substrat avec l'électrode modifiée précédemment est plongé dans une solution de HCl 0,1 M et on impose un potentiel de 0,5 V vs ECS pendant 30 secondes pour chlorer le dépôt d'argent. Le substrat est ensuite rincé à l'eau.

Une étape de photolithographie identique à celle décrite dans l'exemple 1 est ensuite réalisée afin d'entourer ces électrodes obtenues précédemment d'un bourrelet de résine épaisse de marque de commerce Clariant AZ4562 et créer des cuvettes de 500 µm de diamètre, avec des murets de 13 µm de haut et 25 µm de largeur.

Une des bordures (b) obtenues est représentée en entier sur la photographie de la figure 7 annexée. Elle entoure bien la microcellule électrochimique (CE, We, Rf).

Le substrat est finalement silanisé avec un silane hydrophobe (octadécyltrichlorosilane) selon le procédé suivant : le substrat est tout d'abord traité pour générer les sites silanols dans un réacteur à plasma Plassys MDS 150 (marque de commerce) (Société Plassys, France) dans les conditions suivantes : puissance 400W, temps de réaction 2 minutes, pression de 21,33 Pa (160 mTorrs), débit d'oxygène 25cm³/min., à température ambiante. Le substrat est ensuite placé pendant 10 minutes à température ambiante dans un mélange heptane anhydre / silane hydrophobe à 9mM en concentration de silane. Il est ensuite lavé avec de l'heptane, puis du toluène, puis de l'eau. Le substrat est ensuite placé dans une étuve pendant 1 heure à 110°C. L'angle de contact mesuré avec l'eau est voisin de 100°C.

### Exemple 5 : Utilisation d'un dispositif selon l'invention pour une mesure électrochimique avec une solution de Fe²⁺

La cellule électrochimique entourée de sa bordure obtenue dans l'exemple 4 est testée en utilisant la boîte fabriquée dans l'exemple 2, et une solution contenant des ions ferreux (Fe II) est introduite dans la veine fluidique formée par cette boîte.

La figure 8 est un graphique de courbes de voltamétrie cyclique mesurant l'intensité (I(µA)) en fonction du potentiel (mV) avant la formation de la matrice de gouttes et après la formation de la matrice de gouttes sur un dispositif conforme à la présente invention représenté sur la figure 7.

Une première mesure est effectuée en voltamétrie cyclique, montrant la vague d'oxydation des ions ferreux. La solution est ensuite aspirée de la boîte pour ne laisser que les cuvettes remplies chacune par une goutte du liquide d'intérêt. Une seconde mesure électrochimique, identique à la première, est réalisée, montrant de nouveau la présence de la réaction d'oxydation du fer.

Le liquide d'intérêt est donc bien retenu dans les cuvettes, autorisant une mesure après aspiration et vidange de la chambre fluidique formée par la boîte de travail de la présente invention.

Le remplissage de la boîte n'est pas obligatoire, l'essentiel est que les bordures soient recouvertes par le liquide d'intérêt.

Cet exemple montre qu'une matrice de gouttes (g) bien localisées sur les zones de travail est obtenue grâce à ce dispositif conforme à la présente invention. La présente invention répond donc à l'ensemble des besoins précités de l'art antérieur.

### Liste des références

**[1]** WO 02/16023: Protogene Laboratories Inc.
**[2]** US 6, 040, 193: Affymetrix Inc.
**[3]** WO 99/03684 : Eapen Saji et col.
**[4]** Azek et al., Analytical Biochemistry, 2000, 284, 107-113.
**[5]** WO 00/36145 : Commissariat à l'Energie Atomique.
**[6]** WO 02/090573 : Infineon
**[7]** J. Cooper et al., "Micromachining Sensor for Electrochemical Measurement in Subnanoliter Volumes", Anal. Chem. 1997, 69, 253-258.
**[8]** FR-A-2 818 662
**[9]** EP 561 722
**[10]** H. Jansen et al., "The black silicon method : a universal method for determining the parameter setting of a fluorine-based reactive ion etcher in deep silicon trench etching with profile control", J. Micromech. Microeng. 5 (1995), 115-120.

## Revendications

1. Dispositif (1) de travail comprenant :
- une boîte (Bo) de travail munie de moyens d'introduction d'un liquide d'intérêt (E) dans la boîte et de moyens d'extraction (o,s) du liquide d'intérêt de la boîte,
- un substrat (S) comportant une surface active sensiblement non mouillante vis-à-vis dudit liquide d'intérêt enfermée dans ladite boîte,
- plusieurs zones de travail (Zt) formées sur ladite surface active de manière distincte et entourées chacune par une bordure (b) formée sur ladite surface active sensiblement non mouillante vis à vis du liquide d'intérêt, les bordures ne se touchant pas entre elles et n'ayant pas de bord commun,
dans lequel les moyens d'introduction et d'extraction (o,s) du liquide d'intérêt de la boîte sont disposées sur ladite boîte de travail de telle manière que lorsque le liquide d'intérêt est introduit dans la boîte (Bo), il couvre les zones de travail et leur bordure respective, et
dans lequel les bordures ont une géométrie telle que lorsque le liquide d'intérêt est extrait de la boîte, après y avoir été introduit, une goutte (g) du liquide d'intérêt (E) reste prisonnière par chaque bordure (b) et en contact de la zone de travail (Zt) qu'elle entoure.

2. Dispositif selon la revendication 1, dans lequel la, au moins une, zone de travail est dans le même plan que la surface active.

3. Dispositif selon la revendication 1 ou 2,
dans lequel la, au moins une, zone de travail est une zone d'interaction électrique et/ou chimique avec la goutte capturée par sa bordure.

4. Dispositif selon la revendication 3, dans lequel la, au moins une, zone de travail est une microcellule électrochimique.

5. Dispositif selon la revendication 1, dans lequel la, au moins une, zone de travail est un capteur choisi dans le groupe constitué d'un capteur optique, électrique, magnétique, électrostatique, mécanique, thermique ou chimique.

6. Dispositif selon la revendication 1, dans lequel la, au moins une, zone de travail est un actionneur choisi dans le groupe constitué d'un actionneur optique, électrique, magnétique, électrostatique, mécanique, thermique ou chimique.

7. Dispositif selon l'une quelconque des revendications 1 à 4, dans lequel la, au moins une, zone de travail est une zone de détection d'au moins une espèce chimique ou biologique susceptible d'être présente dans la goutte du liquide d'intérêt lorsqu'elle est capturée.

8. Dispositif selon la revendication 7, dans lequel la, au moins une, zone de travail est une zone fonctionnalisée par une sonde destinée à interagir avec une cible susceptible d'être présente dans la goutte du liquide d'intérêt lorsqu'elle est capturée.

9. Dispositif selon la revendication 8, dans lequel la sonde est choisie dans le groupe constitué par une enzyme, un substrat d'enzyme, un oligonucléotide, un oligonucléoside, une protéine, un récepteur membranaire d'une cellule eucaryote ou procaryote, un anticorps, un antigène, une hormone, un métabolite d'un organisme vivant, une toxine d'un organisme vivant, un polynucléotide, un polynucléoside et un ADN complémentaire.

10. Dispositif selon la revendication 1, dans lequel la, au moins une, zone de travail est une zone non mouillante vis-à-vis du liquide d'intérêt.

11. Dispositif selon la revendication 1, dans lequel le substrat est constitué d'un matériau choisi dans le groupe constitué de silicium, d'oxyde de silicium, de nitrure de silicium, de verre, d'un polymère organique, de plastique, d'étain et d'un métal.

12. Dispositif selon la revendication 11, dans lequel le polymère organique est choisi dans le groupe comprenant les polycarbonates, les polydiméthylsiloxanes, les polyméthylmétacrylates, les polychlorobiphényles et les copolymères de cyclooléfines.

13. Dispositif selon la revendication 11, dans lequel le métal est choisi dans le groupe constitué Au, Ti, Pt, Al, Ni, et l'alliage métallique est l'acier inox.

14. Dispositif selon la revendication 1, dans lequel les bordures ont une forme autour de la zone de travail et vue du dessus, choisie parmi une forme annulaire, en étoile, en rectangle, en carré, en triangle, en ellipse, ou en polygone ayant de 4 à 20 côtés.

15. Dispositif selon la revendication 1, dans lequel les bordures ont une section en coupe transversale, dans le sens de la surface active vers la partie haute de la bordure, choisie parmi une forme triangulaire, rectangulaire, conique, tronconique, de demi-cercle, de demi-ellipse.

16. Dispositif de travail selon la revendication 1, dans lequel les bordures sont mouillantes vis à vis du liquide d'intérêt sur leur partie la plus haute par rapport à la surface active et/ou sur leur versant en regard avec la zone de travail qu'elle entoure.

17. Dispositif selon la revendication 1, dans lequel les bordures sont obtenues par emboutissage ou moulage de la surface active.

18. Dispositif de travail selon l'une quelconque des revendications précédentes, dans lequel les moyens d'introduction du liquide d'intérêt dans la boîte comprenant une pompe d'injection du liquide d'intérêt dans la boîte.

19. Dispositif de travail selon l'une quelconque des revendications précédentes, dans lequel les moyens d'extraction du liquide d'intérêt de la boîte comprennent une pompe d'extraction du liquide d'intérêt de la boîte.

20. Dispositif selon la revendication 19, dans lequel la pompe d'extraction du liquide d'intérêt de la boîte est sous la forme d'une pompe d'injection d'un fluide gazeux dans la boîte, par une première ouverture formée sur la boîte, de manière à pouvoir injecter dans la boîte un fluide gazeux chassant le liquide d'intérêt de la boîte par une deuxième ouverture formée sur la boîte.

21. Dispositif selon la revendication 20, dans lequel la pompe d'injection du fluide gazeux comprend un dispositif de saturation du fluide gazeux injecté en vapeur du liquide d'intérêt.

22. Dispositif selon la revendication 19, dans lequel la pompe d'extraction du liquide d'intérêt de la boîte est sous la forme d'une pompe aspirante disposée au niveau d'une ouverture formée sur la boîte de manière à pouvoir extraire le liquide d'intérêt de la boîte en l'aspirant par cette ouverture.

23. Système comprenant un dispositif selon l'une quelconque des revendications 1 à 22.

24. Puce biologique comprenant un dispositif selon l'une quelconque des revendications 1 à 22.

25. Puce biologique selon la revendication 24, ladite puce étant choisie dans le groupe constitué des puces à acide nucléique, des puces à anticorps, des puces à antigènes, des puces à protéine et des puces à cellules.

26. Procédé de fabrication d'un dispositif selon la revendication 1, ledit procédé comprenant les étapes suivantes :
- fournir un substrat
- former des zones de travail sur ledit substrat,
- structurer la surface du substrat de manière à former une bordure autour des zones de travail,
- traiter la surface sur laquelle les zones de travail et leur bordure ont été formées pour la rendre sensiblement non mouillante vis à vis du liquide d'intérêt,
- fournir une boîte et y introduire le substrat comprenant les zones de travail entourées par leur bordure, ladite boîte comprenant des moyens pour introduire le liquide d'intérêt dans la boîte et des moyens pour extraire le liquide d'intérêt de la boîte, et
- fermer ladite boîte.

27. Procédé de fabrication selon la revendication 26, dans lequel les bordures sont formées sur la surface active par gravure directe de ladite surface active.

28. Procédé de fabrication selon la revendication 26, dans lequel les bordures sont formées sur la surface active par dépôt d'un matériau sur ladite surface active puis gravure ou photolithographie dudit matériau.

29. Procédé de fabrication selon la revendication 28, dans lequel le matériau déposé est choisi dans le groupe constitué d'une résine, d'une résine photosensible, de polymères organiques, de métaux, de Si, de Si oxydé, et de nitrure de Si.

30. Procédé de fabrication selon la revendication 28 ou 29, dans lequel le dépôt d'un matériau sur ladite surface active pour former les bordures est réalisé au moyen d'un procédé choisi parmi un procédé par couchage, par évaporation, par pulvérisation, ou par dépôt électrochimique.

31. Procédé de fabrication selon la revendication 28 ou 29, dans lequel le matériau étant photosensible, les bordures sont réalisée par photolithographie.

32. Procédé de fabrication selon la revendication 26 dans lequel les bordures sont obtenues par emboutissage ou moulage de la surface active.

## Claims

1. Work device (1) comprising:
- a work box (Bo) provided with means (o, s) for introducing a liquid of interest (E) into the box and for extracting the liquid of interest from the box,
- a substrate (S) comprising an active surface that is substantially non-wetting for said liquid of interest contained in said box,
- a plurality of distinct work zones (Zt) formed on said active surface and each surrounded by a border (b) formed on said active surface that is substantially non-wetting for the liquid of interest, the borders not touching one another and having no common edge,
in which the means (o, s) for introducing and extracting the liquid of interest respectively into and from the box are arranged on said work box in such a way that when the liquid of interest is introduced into the box (Bo), it covers the work zones and their respective border, and
in which the borders have a geometry such that when the liquid of interest is extracted from the box, after having been introduced therein, a drop (g) of the liquid of interest (E) remains imprisoned by each border (b) and in contact with the work zone (Zt) that it surrounds.

2. Device according to Claim 1, in which the, at least one, work zone is in the same plane as the active surface.

3. Device according to Claim 1 or 2, in which the, at least one, work zone is a zone of electrical and/or chemical interaction with the drop captured by its border.

4. Device according to Claim 3, in which the, at least one, work zone is an electrochemical microcell.

5. Device according to Claim 1, in which the, at least one, work zone is a sensor selected from the group consisting of an optical, electrical, magnetic, electrostatic, mechanical, thermal or chemical sensor.

6. Device according to Claim 1, in which the, at least one, work zone is an actuator selected from the group consisting of an optical, electrical, magnetic, electrostatic, mechanical, thermal or chemical actuator.

7. Device according to any one of Claims 1 to 4, in which the, at least one, work zone is a zone for detecting at least one chemical or biological species that may be present in the drop of the liquid of interest when it is captured.

8. Device according to Claim 7, in which the, at least one, work zone is a zone functionalized by a probe for interacting with a target that may be present in the drop of the liquid of interest when it is captured.

9. Device according to Claim 8, in which the probe is selected from the group consisting of an enzyme, an enzyme substrate, an oligonucleotide, an oligonucleoside, a protein, a membrane receptor of a eukaryotic or prokaryotic cell, an antibody, an antigen, a hormone, a metabolite of a living organism, a toxin of a living organism, a polynucleotide, a polynucleoside and a complementary DNA.

10. Device according to Claim 1, in which the, at least one, work zone is a zone that is non-wetting for the liquid of interest.

11. Device according to Claim 1, in which the substrate consists of a material selected from the group consisting of silicon, silicon dioxide, silicon nitride, glass, an organic polymer, plastic, tin and a metal.

12. Device according to Claim 11, in which the organic polymer is selected from the group comprising polycarbonates, polydimethylsiloxanes, polymethyl methacrylates, polychlorobiphenyls and cycloolefin copolymers.

13. Device according to Claim 11, in which the metal is selected from the group consisting of Au, Ti, Pt, Al, Ni, and the metal alloy is stainless steel.

14. Device according to Claim 1, in which the borders have a shape around the work zone and viewed from above, that is selected from an annular, a star, a rectangle, a square, a triangular, an elliptical shape, or a polygon having 4 to 20 sides.

15. Device according to Claim 1, in which the borders have a cross section, in the direction from the active surface to the upper part of the border, selected from a triangular, rectangular, conical, frustoconical, semi circular or semi-elliptical shape.

16. Work device according to Claim 1, in which the borders are wetting for the liquid of interest on their uppermost part with respect to the active surface and/or on their slope opposite the work zone that it surrounds.

17. Device according to Claim 1, in which the borders are obtained by stamping or moulding of the active surface.

18. Work device according to any one of the preceding claims, in which the means for introducing the liquid of interest into the box comprise a pump for injecting the liquid of interest into the box.

19. Work device according to any one of the preceding claims, in which the means for extracting the liquid of interest from the box comprise a pump for extracting the liquid of interest from the box.

20. Device according to Claim 19, in which the pump for extracting the liquid of interest from the box is in the form of a pump for injecting a gaseous fluid into the box, via a first opening formed in the box, so as to be able to inject into the box a gaseous fluid expelling the liquid of interest from the box via a second opening formed in the box.

21. Device according to Claim 20, in which the gaseous fluid injection pump comprises a device for saturating the gaseous fluid injected with vapour of the liquid of interest.

22. Device according to Claim 19, in which the pump for extracting the liquid of interest from the box is in the form of a suction pump arranged at one opening formed in the box so as to be able to extract the liquid of interest from the box by sucking it out via this opening.

23. System comprising a device according to any one of Claims 1 to 22.

24. Biological chip comprising a device according to any one of Claims 1 to 22.

25. Biological chip according to Claim 24, said chip being selected from the group consisting of nucleic acid chips, antibody chips, antigen chips, protein chips and cell chips.

26. Method for producing a device according to Claim 1, said method comprising the following steps:
- supplying a substrate,
- forming work zones on said substrate,
- structuring the substrate surface so as to form a border around the work zones,
- treating the surface on which the work zones and their border have been formed so as to make it substantially non-wetting for the liquid of interest,
- supplying a box and introducing therein the substrate comprising the work zones surrounded by their border, said box comprising means for introducing the liquid of interest into the box and means for extracting the liquid of interest from the box, and
- closing said box.

27. Production method according to Claim 26, in which the borders are formed on the active surface by direct etching of said active surface.

28. Production method according to Claim 26, in which the borders are formed on the active surface by deposition of a material on said active surface followed by etching or photolithography of said material.

29. Production method according to Claim 28, in which the material deposited is selected from the group consisting of a resin, a photoresist, organic polymers, metals, Si, oxidized Si, and Si nitride.

30. Production method according to Claim 28 or 29, in which the deposition of a material on said active surface to form the borders is carried out using a method selected from coating, evaporation, spraying and electroplating.

31. Production method according to Claim 28 or 29, in which, the material being photosensitive, the borders are made by photolithography.

32. Production method according to Claim 26, in which the borders are obtained by stamping or moulding of the active surface.

## Patentansprüche

1. Bearbeitungsvorrichtung (1), umfassend:
- ein Bearbeitungsgehäuse (Bo), ausgestattet mit Einleiteinrichtungen einer interessierenden Flüssigkeit (E) in das Gehäuse und Entleereinrichtungen (o,s) der interessierenden Flüssigkeit aus dem Gehäuse,
- ein Substrat (S) mit einer im Wesentlichen gegenüber der in dem genannten Gehäuse eingeschlossenen interessierenden Flüssigkeit nicht benetzbaren aktiven Fläche,
- mehrere Bearbeitungszonen (Zt), in unterschiedlicher Weise ausgebildet auf der genannten aktiven Fläche und jede umgeben von einer im Wesentlichen gegenüber der interessierenden Flüssigkeit nicht benetzbaren Umrandung (b), ausgebildet auf der aktiven Fläche, wobei die Umrandungen sich gegenseitig nicht berühren und keinen gemeinsamen Rand haben,
bei der die Einleit- und Entleereinrichtungen (o,s) der interessierenden Flüssigkeit in das bzw. aus dem Gehäuse so auf dem genannten Bearbeitungsgehäuse angeordnet sind, dass - wenn die interessierende Flüssigkeit in das Gehäuse (Bo) eingeleitet wird - sie die Bearbeitungszonen und ihre jeweiligen Umrandungen bedeckt, und
bei der die Umrandungen eine derartige Geometrie haben, dass - wenn die interessierende Flüssigkeit aus dem Gehäuse entleert wird, nachdem sie dort eingeleitet worden ist - durch jede Umrandung (b) ein Tropfen (g) der interessierenden Flüssigkeit (E) zurückgehalten wird und in Kontakt bleibt mit der von ihr umgebenen Arbeitszone (Zt).

2. Vorrichtung nach Anspruch 1, bei der die wenigstens eine Bearbeitungszone sich in derselben Ebene befindet wie die aktive Fläche.

3. Vorrichtung nach Anspruch 1 oder 2, bei der die wenigstens eine Bearbeitungszone eine Zone der elektrischen und/oder chemischen Wechselwirkung mit dem durch seine Umrandung zurückgehaltenen Tropfen ist.

4. Vorrichtung nach Anspruch 3, bei dem wenigstens eine Bearbeitungszone eine elektrochemische Mikrozelle ist.

5. Vorrichtung nach Anspruch 1, bei dem wenigstens eine Bearbeitungszone ein Sensor ist, ausgewählt aus der Gruppe, die durch einen optischen, elektrischen, magnetischen, elektrostatischen, mechanischen, thermischen oder chemische Sensoren gebildet wird.

6. Vorrichtung nach Anspruch 1, bei dem die wenigstens eine Arbeitszone ein Aktor ist, ausgewählt aus der Gruppe, die durch einen optischen, elektrischen, magnetischen, elektrostatischen, mechanischen, thermischen oder chemischen Aktor gebildet wird.

7. Vorrichtung nach einem der Ansprüche 1 bis 4, bei dem die wenigstens eine Bearbeitungszone eine Zone zur Detektion wenigstens einer in dem Tropfen der interessierenden Flüssigkeit möglicherweise vorhandenen chemischen oder biologischen Spezies ist, wenn er zurückgehalten wird.

8. Vorrichtung nach Anspruch 7, bei der wenigstens eine Bearbeitungszone eine durch eine Sonde funktionalisierte Zone ist, die zur Wechselwirkung mit einem in dem Tropfen der interessierenden Flüssigkeit möglicherweise vorhandenen Target bestimmt ist, wenn er zurückgehalten wird.

9. Vorrichtung nach Anspruch 8, bei der die Sonde aus der Gruppe ausgewählt wird, die gebildet wird durch ein Enzym, ein Enzymsubstrat, ein Oligonukleotid, ein Oligonukleosid, ein Protein, einen Membranrezeptor eine eukaryote oder procaryote Zelle, einen Antikörper, ein Antigen, ein Hormon, einen Metabolit eines lebenden Organismus, ein Toxin eines lebenden Organismus, ein Polynukleotid, ein Polynukleosid und eine komplementäre DNA.

10. Vorrichtung nach Anspruch 1, bei der die wenigstens eine Bearbeitungszone eine gegenüber der interessierenden Flüssigkeit nicht benetzbare Zone ist.

11. Vorrichtung nach Anspruch 1, bei der das Substrat durch ein Material gebildet wird, das ausgewählt wird aus der Gruppe, die gebildet wird durch Silicium, Silciumoxid, Siliciumnitrid, Glas, ein organisches Polymer, Plastik bzw. Kunststoff, Zinn und ein Metall.

12. Vorrichtung nach Anspruch 11, bei der das organische Polymer ausgewählt wird aus der Gruppe, welche die Polycarbonate, die Polydimethylsiloxane, die Polymethylmetaacrylate, die Polychlorbiphenyle und die Cycloolefin-Copolymere umfasst.

13. Vorrichtung nach Anspruch 11, bei der das Metall ausgewählt wird aus der Gruppe, die Au, Ti, Pt, Al, Ni umfasst und die Metalllegierung Inox-Stahl ist.

14. Vorrichtung nach Anspruch 1, bei der die Umrandungen der Bearbeitungszonen in der Draufsicht eine Form aufweisen, die ausgewählt wird unter ringförmig, sternförmig, rechteckig, quadratisch, dreieckig, elliptisch oder vieleckig mit 4 bis 20 Seiten.

15. Vorrichtung nach Anspruch 1, bei der die Umrandungen auf der aktiven Fläche einen Querschnitt aufweisen, dessen Form ausgewählt wird unter dreieckig, rechteckig, konisch, kegelstumpfförmig, halbkreisförmig, halbelliptisch.

16. Vorrichtung nach Anspruch 1, bei der die Umrandungen gegenüber der interessierenden Flüssigkeit in ihrem obersten Teil in Bezug auf die aktive Fläche und/oder auf ihrer der Arbeitszone, die sie umgeben, gegenüberstehenden Seite benetzbar sind.

17. Vorrichtung nach Anspruch 1, bei der die Umrandungen durch Prägen oder Gießen bzw. Formen der aktiven Fläche realisiert werden.

18. Bearbeitungsvorrichtung nach einem der vorangehenden Ansprüche, bei der die Einrichtungen zum Einleiten der interessierenden Flüssigkeit in das Gehäuse eine Pumpe zum Einspritzen der interessierenden Flüssigkeit in das Gehäuse umfassen.

19. Bearbeitungsvorrichtung nach einem der vorangehenden Ansprüche, bei der die Einrichtungen zum Entleeren der interessierenden Flüssigkeit aus dem Gehäuse eine Pumpe zum Entleeren der interessierenden Flüssigkeit aus dem Gehäuse umfassen.

20. Vorrichtung nach Anspruch 19, bei der die Pumpe zum Entleeren der interessierenden Flüssigkeit aus dem Gehäuse eine Pumpe zum Einspritzen eines gasförmigen Fluids in das Gehäuse durch eine erste Öffnung des Gehäuses umfasst, so dass man durch das Einspritzen eines gasförmigen Fluids die interessierende Flüssigkeit durch eine zweite Öffnung des Gehäuses austreiben kann.

21. Vorrichtung nach Anspruch 20, bei der die Pumpe zum Einspritzen eines gasförmigen Fluids eine Einrichtung zur Sättigung des eingespritzten gasförmigen Fluids mit dem Dampf der interessierenden Flüssigkeit umfasst.

22. Vorrichtung nach Anspruch 19, bei der die Pumpe zum Entleeren der interessierenden Flüssigkeit aus dem Gehäuse eine Saugpumpe ist, angeordnet in Höhe einer Öffnung des Gehäuses, die so ausgebildet ist, dass man die interessierende Flüssigkeit aus dem Gehäuse entleeren kann, indem man sie durch diese Öffnung saugt.

23. System, das eine Vorrichtung nach einem der Ansprüche 1 bis 22 umfasst.

24. Biochip, der eine Vorrichtung nach einem der Ansprüche 1 bis 22 umfasst.

25. Biochip nach Anspruch 24, wobei der genannte Chip ausgewählt wird aus der Gruppe, die durch Nukleinsäure-Chips, Antikörper-Chips, Antigen-Chips, Protein-Chips und Zell-Chips gebildet wird.

26. Verfahren zur Herstellung einer Vorrichtung nach Anspruch 1, wobei das genannte Verfahren die folgenden Schritte umfasst:
- Beschaffen eines Substrats;
- Ausbilden der Arbeitszonen auf dem genannten Substrat;
- Strukturieren der Oberfläche des genannten Substrats zur Bildung einer Umrandung der Bearbeitungszonen;
- Behandeln der Oberfläche, auf der die Bearbeitungszonen und ihre Umrandung ausgebildet worden sind, um sie im Wesentlichen unbenetzbar gegenüber der interessierenden Flüssigkeit zu machen;
- Beschaffen eines Gehäuses für den Zusammenbau mit dem die von ihrer Umrandung umgebenen Verarbeitungszonen umfassenden Substrat, wobei das genannte Gehäuse Einrichtungen zum Einleiten der interessierenden Flüssigkeit in das Gehäuse und Einrichtungen zum Entleeren der interessierenden Flüssigkeit aus dem Gehäuse umfasst; und
- Verschließen bzw. Abdichten des genannten Gehäuses bzw. der Kammer.

27. Herstellungsverfahren nach Anspruch 26, bei dem die Umrandungen auf der genannten aktiven Fläche durch direktes Ätzen der aktiven Fläche ausgebildet werden.

28. Herstellungsverfahren nach Anspruch 26, bei dem die Umrandungen auf der genannten aktiven Fläche durch Abscheidung eines Materials auf der aktiven Fläche und dann Ätzen oder Photolithographieren des genannten Materials ausgebildet werden.

29. Herstellungsverfahren nach Anspruch 28, bei dem das abgeschiedene Material ausgewählt wird aus der Gruppe, die durch ein Harz, ein Fotoresist, organische Polymere, Metalle, Si, oxidiertes Si und Si-Nitrat gebildet wird.

30. Herstellungsverfahren nach Anspruch 28 oder 29, bei dem das Abscheiden eines Materials zur Ausbildung der Umrandungen auf der genannten aktiven Fläche mittels eines Verfahrens realisiert wird, das ausgewählt wird unter einem Beschichtungs-, einem Aufdampfungs-, einem Sputter- oder einem elektrochemischen Abscheidungsverfahren.

31. Herstellungsverfahren nach Anspruch 28 oder 29, bei dem das Material photosensibel ist und die Umrandungen durch Photolithographie realisiert werden.

32. Herstellungsverfahren nach Anspruch 26, bei dem man die Umrandungen durch Prägen oder Gießen bzw. Formen der aktiven Fläche realisiert.
